# EUROPEAN PATENT APPLICATION

(11) **EP 2 570 891 A1**
(43) Date of publication of application: **20.03.2013**
(21) Application number: 12181195.4
(22) Date of filing: 21.08.2012
(51) Int. Cl.: G06F 3/02

(54) **Projector**

(30) Priority: 15.09.2011 JP 2011201736
(71) Applicant: Funai Electric Co., Ltd., Daito-shi, Osaka 574-0013 (JP)
(72) Inventor: Izukawa, Shintaro, Daito-shi,, Osaka 574-0013 (JP)
(74) Representative: Manitz, Finsterwald & Partner GbR

(57) **Abstract**

This projector (100) includes a laser beam emitting portion (61a, 62a, 63a, 64a), a projection portion (69a) projecting an image on an arbitrary projection region (1), and a detecting portion (10a, 10b) detecting a laser beam reflected by an object to be detected, and is configured to acquire the inclination of the object to be detected with respect to the projection region on the basis of the laser beam detected by the detecting portion.

## Description

### BACKGROUND OF THE INVENTION

### Field of the Invention

The present invention relates to a projector, and more particularly, it relates to a projector including a laser beam emitting portion emitting a laser beam.

### Description of the Background Art

A projector including a laser beam emitting portion emitting a laser beam is known in general, as disclosed in Japanese Patent Laying-Open No. 2009-123006, for example.

The aforementioned Japanese Patent Laying-Open No. 2009-123006 discloses a projector including three laser sources (laser beam emitting portions) emitting three laser beams, i.e., red, green, and blue laser beams, and a scanning unit scanning the laser beams emitted from the laser sources. In this projector, an image is projected on a projection region such as a table or a wall surface through a lens provided on an upper portion of the projector by scanning the red, green, and blue laser beams emitted from the laser sources by the scanning unit. When a stylus pen (object to be detected) grasped by a user approaches the image projected on the table, the laser beams emitted from the laser sources are reflected by the stylus pen, and the reflected laser beams are received by a light receiver provided on the projector. Thus, the positional information (coordinates) of the stylus pen grasped by the user in a plane (surface) of the projection region is detected.

However, in the projector described in the aforementioned Japanese Patent Laying-Open No. 2009-123006, only the coordinates of the stylus pen grasped by the user in the plane of the projection region can be detected, and it is difficult to detect the posture (state) of the stylus pen other than the coordinates thereof in the plane of the projection region. Therefore, it is difficult to control the image projected on the projection region on the basis of the posture (state) of the stylus pen grasped by the user.

### SUMMARY OF THE INVENTION

The present invention has been proposed in order to solve the aforementioned problem, and an object of the present invention is to provide a projector capable of controlling an image projected on a projection region on the basis of the posture (state) of an object to be detected.

A projector according to an aspect of the present invention includes a laser beam emitting portion emitting laser beams, a projection portion projecting an image on an arbitrary projection region by scanning the laser beams emitted from the laser beam emitting portion, and a detecting portion detecting a laser beam reflected by an object to be detected of the laser beams emitted from the laser beam emitting portion, and is configured to acquire the inclination of the object to be detected with respect to the projection region on the basis of the laser beam detected by the detecting portion.

In the projector according to this aspect, as hereinabove described, the inclination of the object to be detected with respect to the projection region is acquired on the basis of the laser beam detected by the detecting portion, whereby in addition to an image based on the coordinates of the object to be detected in a plane of the projection region, an image based on the state (inclination) of the object to be detected other than the coordinates thereof in the plane of the projection region can be controlled. Thus, the object to be detected is tilted to the upper side or lower side of the image on the image projected on the projection region, for example, whereby the projected image can be scrolled to the upper side or lower side to correspond to the inclination of the object to be detected. Consequently, types of images controllable on the basis of the posture (state) of the object to be detected can be increased.

The aforementioned projector according to the aspect preferably further includes a control portion that performs control of acquiring the positional information of a plurality of regions of the object to be detected in a height direction on the basis of the timing of incidence of the laser beam detected by the detecting portion and acquiring the inclination of the object to be detected with respect to the projection region from the positional information of the plurality of regions. According to this structure, the inclination of the object to be detected can be easily detected using the positional information of the plurality of regions of the object to be detected in the height direction.

In this case, the control portion is preferably configured to perform control of detecting a difference between the positional information of the plurality of regions of the object to be detected in the height direction acquired on the basis of the timing of incidence of the laser beam detected by the detecting portion, and acquiring the inclination of the object to be detected with respect to the projection region from the difference between the positional information of the plurality of regions. According to this structure, the inclination of the object to be detected with respect to the projection region can be easily detected using the difference between the positional information of the plurality of regions of the object to be detected in the height direction.

In the aforementioned projector including the control portion, the control portion is preferably configured to perform control of acquiring the coordinates of the plurality of regions of the object to be detected in the height direction based on scanning signals of the laser beams emitted from the laser beam emitting portion at the time when the detecting portion detects the laser beam reflected by the object to be detected as the positional information of the plurality of regions. According to this structure, the coordinates of the plurality of regions of the object to be detected in the height direction can be acquired as the positional information of the plurality of regions, and hence the inclination of the object to be detected with respect to a surface of the projection region can be easily detected using the coordinates of the plurality of regions of the object to be detected in the height direction, dissimilarly to a case where only the coordinates of the object to be detected in the plane of the projection region can be detected.

In the aforementioned projector including the control portion, the detecting portion preferably includes a first detector detecting the laser beam reflected by a first region of the object to be detected and a second detector detecting the laser beam reflected by a second region of the object to be detected having a height from the projection region higher than that of the first region, and the control portion is preferably configured to perform control of detecting the positional information of the first region and the positional information of the second region on the basis of the timing of incidence of the laser beam detected by the first detector and the timing of incidence of the laser beam detected by the second detector, and acquiring the inclination of the object to be detected with respect to the projection region from the positional information of the first region and the positional information of the second region. According to this structure, the inclination of the object to be detected with respect to the projection region can be easily acquired from the positional information of the first region and the second region having heights different from each other, and the display contents of the image projected on the projection region can be controlled to correspond to the acquired inclination of the object to be detected.

In the aforementioned projector detecting the inclination of the object to be detected from the positional information of the first region and the second region having heights different from each other, the projection portion is preferably configured to continuously alternately scan the laser beams in a horizontal direction that is a lateral direction and a vertical direction that is a longitudinal direction in the plane of the projection region, and the control portion is preferably configured to perform control of detecting the positional information in the horizontal direction of the first region and the second region of the object to be detected on the basis of scanning signals in the horizontal direction of the laser beams emitted from the laser beam emitting portion, and detecting the positional information in the vertical direction of the first region and the second region of the object to be detected on the basis of scanning signals in the vertical direction of the laser beams emitted from the laser beam emitting portion. According to this structure, the inclinations in the horizontal direction and the vertical direction of the object to be detected with respect to the surface of the projection region can be easily acquired from the positional information in the horizontal direction and the vertical direction of the first region and the second region of the object to be detected that is detected on the basis of the scanning signals of the laser beams emitted from the laser beam emitting portion.

In the aforementioned projector configured to continuously alternately scan the laser beams in the horizontal direction and the vertical direction in the plane of the projection region, the detecting portion is preferably configured to detect the laser beam reflected by the first region of the object to be detected and the laser beam reflected by the second region of the object to be detected such that the timing of incidence of the laser beam reflected by the first region of the object to be detected and the timing of incidence of the laser beam reflected by the second region of the object to be detected are coincident with each other when the object to be detected is positioned perpendicularly to the surface of the projection region, and the control portion is preferably configured to perform control of acquiring the tilt angle in the horizontal direction of the object to be detected with respect to the surface of the projection region on the basis of a value of a difference between the positional information in the horizontal direction of the first region of the object to be detected and the positional information in the horizontal direction of the second region of the object to be detected when the object to be detected is tilted in the horizontal direction. According to this structure, the control portion can determine that the object to be detected is positioned perpendicularly to the surface of the projection region if the value of the difference between the positional information in the horizontal direction of the first region of the object to be detected and the positional information in the horizontal direction of the second region of the object to be detected is zero, and determine that the object to be detected is tilted in the horizontal direction (lateral direction) with respect to the surface of the projection region if the value of the difference between the positional information in the horizontal direction of the first region of the object to be detected and the positional information in the horizontal direction of the second region of the object to be detected is not zero.

In this case, the control portion is preferably configured to perform control of determining that the object to be detected is tilted to one side in the horizontal direction if the value of the difference between the positional information in the horizontal direction of the first region of the object to be detected and the positional information in the horizontal direction of the second region of the object to be detected is either one of positive and negative values, and determining that the object to be detected is tilted to the other side in the horizontal direction if the value of the difference is the other one of positive and negative values. According to this structure, the control portion can easily determine which side in the horizontal direction the object to be detected is tilted to.

In the aforementioned projector configured to continuously alternately scan the laser beams in the horizontal direction and the vertical direction in the plane of the projection region, the control portion is preferably configured to perform control of setting the amount of deviation between the timing of incidence of the laser beam reflected by the first region detected by the detecting portion and the timing of incidence of the laser beam reflected by the second region detected by the detecting portion in a state where the object to be detected is positioned perpendicularly to the surface of the projection region as an offset value when the timing of incidence of the laser beam reflected by the first region of the object to be detected upon the detecting portion deviates from the timing of incidence of the laser beam reflected by the second region of the object to be detected upon the detecting portion in the state where the object to be detected is positioned perpendicularly to the surface of the projection region, and acquiring the tilt angle in the vertical direction of the object to be detected with respect to the surface of the projection region on the basis of a value obtained by subtracting the offset value from a difference between the positional information in the vertical direction of the first region of the object to be detected and the positional information in the vertical direction of the second region of the object to be detected when the object to be detected is tilted in the vertical direction. According to this structure, the control portion can determine that the object to be detected is positioned perpendicularly to the surface of the projection region if the value obtained by subtracting the offset value and the positional information in the vertical direction of the first region of the object to be detected from the positional information in the vertical direction of the second region of the object to be detected is zero, and determine that the object to be detected is tilted in the vertical direction (longitudinal direction) with respect to the surface of the projection region if the value obtained by subtracting the offset value and the positional information in the vertical direction of the first region of the object to be detected from the positional information in the vertical direction of the second region of the object to be detected is not zero.

In this case, the control portion is preferably configured to perform control of determining that the object to be detected is tilted to one side in the vertical direction if the value obtained by subtracting the offset value from the difference between the positional information in the vertical direction of the first region of the object to be detected and the positional information in the vertical direction of the second region of the object to be detected is either one of positive and negative values, and determining that the object to be detected is tilted to the other side in the vertical direction if the value obtained by subtracting the offset value from the difference between the positional information in the vertical direction of the first region of the object to be detected and the positional information in the vertical direction of the second region of the object to be detected is the other one of positive and negative values. According to this structure, the control portion can easily determine which side in the vertical direction the object to be detected is tilted to.

In the aforementioned projector configured to continuously alternately scan the laser beams in the horizontal direction and the vertical direction in the plane of the projection region, the control portion is preferably configured to perform control of determining that an object that has been detected is the object to be detected if a value of a difference between the positional information in the horizontal direction or the vertical direction of the first region of the object to be detected and the positional information in the horizontal direction or the vertical direction of the second region of the object to be detected is within a preset value. According to this structure, the control portion can easily distinguish the object to be detected from an object other than the object to be detected.

In the aforementioned projector in which the detecting portion includes the first detector and the second detector, the height of the second detector from the surface of the projector region is preferably larger than the height of the first detector from the surface of the projection region. According to this structure, the laser beam reflected by the first region of the object to be detected and the laser beam reflected by the second region of the object to be detected having the height from the projection region higher than that of the first region of the object to be detected can be easily detected.

In the aforementioned projector in which the detecting portion includes the first detector and the second detector, the object to be detected is preferably the finger of a user, and the control portion is preferably configured to perform control of detecting the positional information of an upper region of the finger of the user and the positional information of a lower region of the finger of the user on the basis of the timing of incidence of the laser beam detected by the first detector and the timing of incidence of the laser beam detected by the second detector, and acquiring the inclination of the finger of the user with respect to the projection region from the positional information of the upper region of the finger of the user and the positional information of the lower region of the finger of the user. According to this structure, the finger of the user is tilted to the upper side or lower side of the image on the image projected on the projection region, for example, whereby the projected image can be scrolled to the upper side or lower side to correspond to the inclination of the finger of the user. Consequently, types of images controllable on the basis of the posture (state) of the finger of the user can be increased.

In the aforementioned projector including the control portion, the control portion is preferably configured to perform control of comparing the moving distance of the object to be detected acquired on the basis of a change in the tilt angle of the object to be detected with respect to the surface of the projection region with the moving distance of the object to be detected acquired on the basis of a change in the positional information of the object to be detected, and determining whether or not the image projected on the projection region has been manipulated by the object to be detected on the basis of the comparison result, if the detecting portion detects the change in the tilt angle of the object to be detected with respect to the surface of the projection region. According to this structure, when the image projected on the projection region is manipulated by a plurality of objects to be detected (the forefinger and the thumb of the user, for example), the control portion can infer whether or not the image projected on the projection region has been manipulated by the plurality of objects to be detected (the forefinger and the thumb of the user) on the basis of the comparison between the moving distance of the object to be detected acquired on the basis of the change in the tilt angle of the object to be detected with respect to the surface of the projection region and the moving distance of the object to be detected acquired on the basis of the change in the positional information of the object to be detected even if one (the forefinger) of the plurality of objects to be detected can be detected by the detecting portion while the other (the thumb) of the plurality of objects to be detected cannot be detected by the detecting portion because of hiding in one (the forefinger) of the plurality of objects to be detected.

In the aforementioned projector including the control portion, the laser beam emitting portion preferably includes a laser beam emitting portion emitting a visible laser beam to project an arbitrary image on the projection region and a laser beam emitting portion emitting an invisible laser beam that does not contribute to an image, the detecting portion is preferably configured to be capable of detecting the invisible laser beam detected by the object to be detected of the laser beams emitted from the laser beam emitting portion, and the control portion is preferably configured to perform control of detecting the positional information of the plurality of regions of the object to be detected in the height direction on the basis of the timing of incidence of the invisible laser beam detected by the detecting portion, and acquiring the inclination of the object to be detected with respect to the projection region from the positional information of the plurality of regions. According to this structure, the invisible laser beam is reflected by the object to be detected so that the inclination of the object to be detected can be easily acquired even if a black image is projected on the projection region, dissimilarly to a case where the object to be detected is detected with the visible laser beam.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically illustrates a used state of a projector according to a first embodiment of the present invention;
Fig. 2 is a block diagram showing the structure of the projector according to the first embodiment of the present invention;
Fig. 3 is a top view showing a projection region of the projector according to the first embodiment of the present invention;
Fig. 4 illustrates a state where a finger of a user is positioned substantially perpendicularly to the projection region according to the first embodiment of the present invention;
Fig. 5 illustrates timing of detection of an infrared laser beam reflected by the finger of the user in the state shown in Fig. 4;
Fig. 6 illustrates a state where the finger of the user is tilted to the left side with respect to the projector according to the first embodiment of the present invention;
Fig. 7 illustrates timing of detection of an infrared laser beam reflected by the finger of the user in the state shown in Fig. 6;
Fig. 8 illustrates a state where the finger of the user is tilted to the right side with respect to the projector according to the first embodiment of the present invention;
Fig. 9 illustrates timing of detection of an infrared laser beam reflected by the finger of the user in the state shown in Fig. 8;
Fig. 10 illustrates another state where the finger of the user is positioned substantially perpendicularly to the projection region according to the first embodiment of the present invention;
Fig. 11 illustrates timing of detection of an infrared laser beam reflected by the finger of the user in the state shown in Fig. 10;
Fig. 12 illustrates a state where the finger of the user is tilted to the projector (rear side) according to the first embodiment of the present invention;
Fig. 13 illustrates timing of detection of an infrared laser beam reflected by the finger of the user in the state shown in Fig. 12;
Fig. 14 illustrates a state where the finger of the user is tilted to the side (front side) opposite to the projector according to the first embodiment of the present invention;
Fig. 15 illustrates timing of detection of an infrared laser beam reflected by the finger of the user in the state shown in Fig. 14;
Fig. 16 illustrates a control flow for calculating the inclination of the finger of the user according to the first embodiment of the present invention;
Fig. 17 illustrates a pinch out operation by a multi-touch gesture according to a second embodiment of the present invention;
Fig. 18 illustrates a pinch in operation by the multi-touch gesture according to the second embodiment of the present invention; and
Fig. 19 illustrates a control flow for determining whether or not the multi-touch gesture according to the second embodiment of the present invention has been made.

### DESCRIPTION OF THE PREFERRED EMBODIMENTS

Embodiments of the present invention are now described with reference to the drawings.

### (First Embodiment)

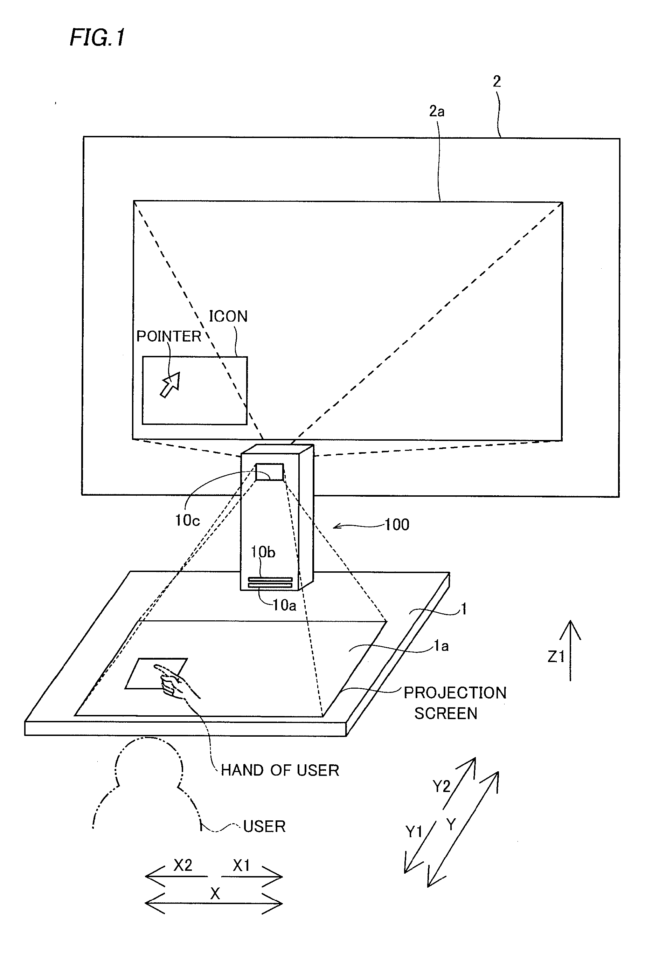

First, the structure of a projector 100 according to a first embodiment of the present invention is described with reference to Figs. 1 to 15.

The projector 100 according to the first embodiment of the present invention is disposed on a table 1 for use, as shown in Fig. 1. The projector 100 is so configured that an image 2a for presentation (for display) is projected on a projection region such as a screen 2. The table 1 and the screen 2 are examples of the "projection region" in the present invention. Furthermore, the projector 100 is so configured that an image 1a same as the image 2a for presentation is projected on the upper surface of a projection region such as the table 1. The size of the image 1a projected on the table 1 is smaller than the size of the image 2a projected on the screen 2.

The projector 100 is configured to allow a user to manipulate the image 1a projected on the table 1 with his/her finger. The user usually manipulates the image 1a with his/her forefinger from a position opposed to the projector 100 through the image 1a (side of the projector along arrow Y1).

Two infrared detectors 10a and 10b that do not contribute to image projection are provided on a side surface of the projector 100 closer to the side (along arrow Y1) on which the image 1a is projected to detect an infrared laser beam (substantially invisible laser beam) having a wavelength of about 780 nm. The infrared detector 10a is an example of the "first detector" or the "detecting portion" in the present invention, and the infrared detector 10b is an example of the "second detector" or the "detecting portion" in the present invention. These two infrared detectors 10a and 10b include photodiodes or the like. The infrared detector 10b is so arranged that the height thereof from a surface of the table 1 is larger than the height of the infrared detector 10a from the surface of the table 1.

The infrared detector 10a is configured to be capable of detecting an infrared laser beam reflected by a relatively lower region of the finger of the user while the infrared detector 10b is configured to be capable of detecting an infrared laser beam reflected by a relatively upper region of the finger of the user. The lower region of the finger of the user is an example of the "first region" in the present invention, and the upper region of the finger of the user is an example of the "second region" in the present invention.

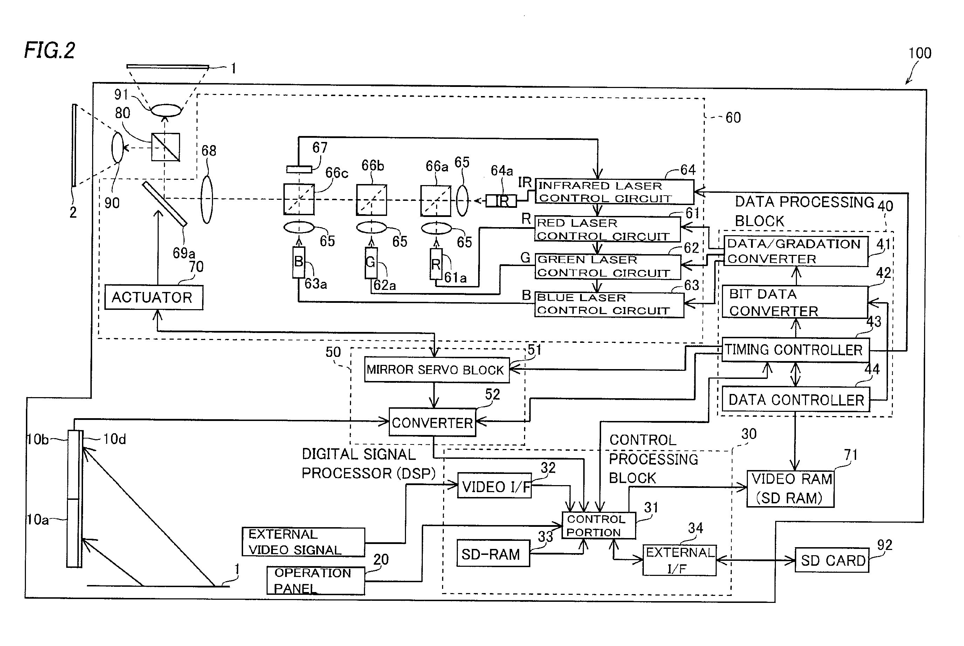

A laser projection aperture 10c through which an infrared laser beam and visible red, green, and blue laser beams described later are emitted is provided in a region of the projector 100 above the infrared detector 10b. As shown in Fig. 2, a visible light filter 10d is provided on portions of the infrared detectors 10a and 10b on the side of the projection region to cut visible red, green, and blue laser beams.

As shown in Fig. 2, the projector 100 includes an operation panel 20, a control processing block 30, a data processing block 40, a digital signal processor (DSP) 50, a laser source 60, a video RAM (SD RAM) 71, a beam splitter 80, and two magnifying lenses 90 and 91.

The control processing block 30 includes a control portion 31 controlling the entire projector 100, a video I/F 32 that is an interface (I/F) to receive an external video signal, an SD-RAM 33 storing various types of data, and an external I/F 34.

The data processing block 40 includes a data/gradation converter 41, a bit data converter 42, a timing controller 43, and a data controller 44. The digital signal processor 50 includes a mirror servo block 51 and a converter 52.

The laser source 60 includes a red laser control circuit 61, a green laser control circuit 62, a blue laser control circuit 63, and an infrared laser control circuit 64. The red laser control circuit 61 is connected with a red LD (laser diode) 61a emitting a red (visible) laser beam. The green laser control circuit 62 is connected with a green LD 62a emitting a green (visible) laser beam. The blue laser control circuit 63 is connected with a blue LD 63a emitting a blue (visible) laser beam. The infrared laser control circuit 64 is connected with an infrared LD 64a emitting an infrared (invisible) laser beam that does not contribute to image projection. The red LD 61a, the green LD 62a, the blue LD 63a, and the infrared LD 64a are examples of the "laser beam emitting portion" in the present invention.

The laser source 60 further includes four collimate lenses 65, three polarizing beam splitters 66a, 66b, and 66c, a photodetector 67, a lens 68, a MEMS mirror 69a to scan laser beams in a horizontal direction and a vertical direction, and an actuator 70 to drive the MEMS mirror 69a in the horizontal direction and the vertical direction. The MEMS mirror 69a is an example of the "projection portion" in the present invention.

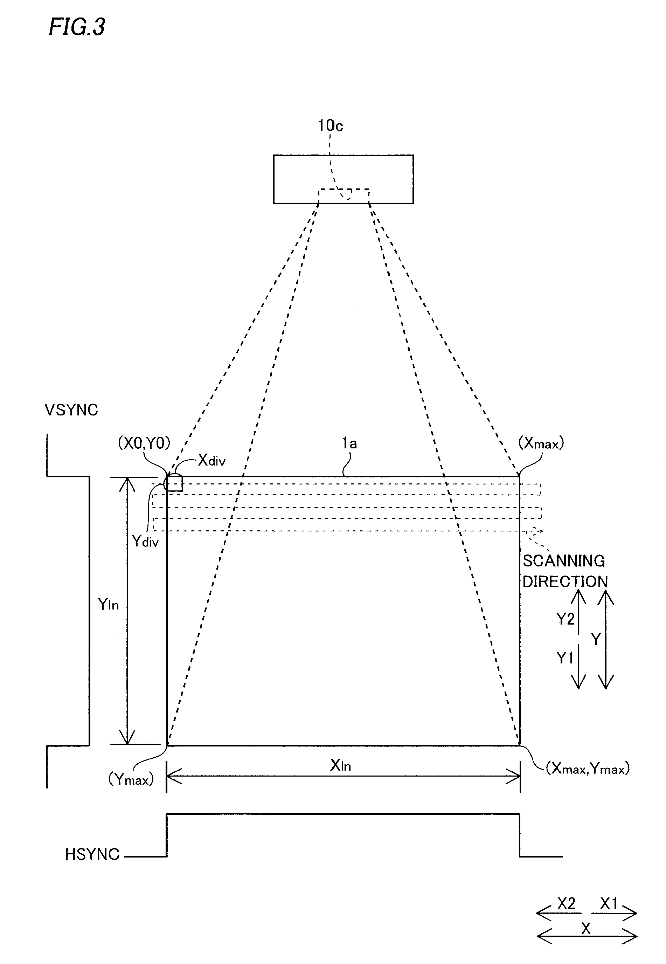

The laser beams emitted from the red LD 61a, the green LD 62a, the blue LD 63a, and the infrared LD 64a are incident upon the common MEMS mirror 69a. The MEMS mirror 69a scans the red, green, and blue laser beams emitted from the red LD 61a, the green LD 62a, and the blue LD 63a, whereby the images 1a and 2a are projected on the table 1 and the screen 2, respectively. As shown in Fig. 3, the image 1a projected on the table 1 has a rectangular shape, and has a length of Xₗₙ [mm] in the horizontal direction (direction X) that is a lateral direction in a plane of the table 1 and a length of Yₗₙ [mm] in the vertical direction (direction Y) that is a longitudinal direction in the plane of the table 1. The image 1a has coordinates of X0 to Xₘₐₓ in the direction X and coordinates of Y0 to Yₘₐₓ in the direction Y. Therefore, a size X_{div} [mm] in the direction X per coordinate is calculated according to a formula X_{div} [mm] = Xₗₙ [mm]/Xₘₐₓ. A size Y_{div} [mm] in the direction Y per coordinate is calculated according to the following expression: Y_{div} [mm] = Yₗₙ [mm]/Yₘₐₓ.

The red, green, blue, and infrared laser beams are continuously alternately scanned in the horizontal direction (from an arrow X2 direction side to an arrow X1 direction side or from the arrow X1 direction side to the arrow X2 direction side) and the vertical direction (from an arrow Y2 direction side to an arrow Y1 direction side). Specifically, the MEMS mirror 69a scans the red, green, blue, and infrared laser beams in the horizontal direction (from the arrow X2 direction side to the arrow X1 direction side), and thereafter scans the red, green, blue, and infrared laser beams in one coordinate in the vertical direction (from the arrow Y2 direction side to the arrow Y1 direction side). Then, the MEMS mirror 69a scans the red, green, blue, and infrared laser beams in the horizontal direction (from the arrow X1 direction side to the arrow X2 direction side), and thereafter scans the red, green, blue, and infrared laser beams in one coordinate in the vertical direction (from the arrow Y2 direction side to the arrow Y1 direction side). The MEMS mirror 69a is configured to repeat the aforementioned scanning until the same reaches coordinates (Xₘₐₓ, Yₘₐₓ).

As shown in Fig. 2, the operation panel 20 is provided on a front surface or side surface of a housing of the projector 100. The operation panel 20 includes a display (not shown) to display operation contents, a switch to accept operation input performed on the projector 100, and so on, for example. The operation panel 20 is configured to transmit a signal in response to a user operation to the control portion 31 of the control processing block 30 when receiving the user operation.

An external video signal derived from outside the projector 100 is input to the video I/F 32. The external I/F 34 is configured such that a memory such as an SD card 92 is mountable thereon. The external I/F 34 is configured to be capable of being connected with a PC or the like through a cable or the like, and serve as an output portion capable of transmitting positional information or the like of the finger of the user to the PC. The control portion 31 is configured to retrieve data from the SD card 92, and the retrieved data is stored in the video RAM 71.

The control portion 31 is configured to control display of an image based on image data temporarily stored in the video RAM 71 by intercommunicating with the timing controller 43 of the data processing block 40.

The data processing block 40 is so configured that the timing controller 43 retrieves data stored in the video RAM 71 through the data controller 44 on the basis of a signal output from the control portion 31. The data controller 44 transmits the retrieved data to the bit data converter 42. The bit data converter 42 transmits the data to the data/gradation converter 41 on the basis of a signal from the timing controller 43. The bit data converter 42 has a function of converting image data derived from outside into data conforming to a format allowing projection by laser beams. The timing controller 43 is connected to the infrared laser control circuit 64, and transmits a signal to the infrared laser control circuit 64 to emit a laser beam from the infrared LD 64a in synchronization with the laser beams emitted from the red LD 61a, the green LD 62a, and the blue LD 63a.

The data/gradation converter 41 is configured to convert the data output from the bit data converter 42 into color gradation data of red (R), green (G), and blue (B), and transmit the data after conversion to the red laser control circuit 61, the green laser control circuit 62, and the blue laser control circuit 63.

The red laser control circuit 61 is configured to transmit the data from the data/gradation converter 41 to the red LD 61a. The green laser control circuit 62 is configured to transmit the data from the data/gradation converter 41 to the green LD 62a. The blue laser control circuit 63 is configured to transmit the data from the data/gradation converter 41 to the blue LD 63a.

Signals received by the two infrared detectors 10a and 10b provided on the side surface of the projector 100 closer to the side on which the image 1a is projected are input to the control portion 31 through the converter 52.

In a region to which both the visible red, green, and blue laser beams and the infrared laser beam are emitted (projection range of the visible laser beams and the infrared laser beam), the laser beams emitted from the red LD 61a, the green LD 62a, and the blue LD 63a and the infrared laser beam emitted from the infrared LD 64a are scanned along the same scanning path. In other words, the planar positions (coordinates) on the table 1 of the laser beams emitted from the red LD 61a, the green LD 62a, and the blue LD 63a and the planar position (coordinates) of the infrared laser beam emitted from the infrared LD 64a are substantially coincident with each other.

The control portion 31 is configured to perform control of acquiring the coordinates of the finger of the user in the horizontal direction (direction X) on the basis of scanning signals (HSYNCs) in the horizontal direction (direction X) of the laser beams emitted from the red LD 61a, the green LD 62a, and the blue LD 63a at the time when the infrared detectors 10a and 10b detect the infrared laser beam reflected by the finger of the user. Furthermore, the control portion 31 is configured to perform control of acquiring the coordinates of the finger of the user in the vertical direction (direction Y) on the basis of scanning signals (VSYNCs) in the vertical direction (direction Y) of the laser beams emitted from the red LD 61a, the green LD 62a, and the blue LD 63a at the time when the infrared detectors 10a and 10b detect the infrared laser beam reflected by the finger of the user.

According to the first embodiment, the control portion 31 is configured to perform control of acquiring the coordinates in the horizontal direction and the vertical direction of the upper region and the lower region of the finger of the user in a height direction (along arrow Z1) and acquiring the inclination of the finger of the user with respect to a surface of the image 1a, on the basis of a difference in the timing of incidence of the infrared laser beam reflected by the finger of the user upon the infrared detectors 10a and 10b.

The inclination θ_{X} [degree] of the finger of the user in the horizontal direction (direction X) is calculated according to a formula θ_{X} = tan⁻¹(h/((|Xᵤₚ - X_{down}| × X_{div}))), where a coordinate in the direction X corresponding to the upper region of the finger of the user is Xᵤₚ, a coordinate in the direction X corresponding to the lower region of the finger of the user is X_{down}, and a distance between the infrared detectors 10a and 10b is h [mm]. The distance X_{div} in the direction X per coordinate is calculated according to a formula X_{div} [mm] = Xₗₙ [mm]/Xₘₐₓ. The control portion 31 is configured to determine that the finger of the user is tilted to the left side (along arrow X2) if Xᵤₚ - X_{down} < 0 and determine that the finger of the user is tilted to the right side (along arrow X1 if Xᵤₚ - X_{down} > 0. Furthermore, the control portion 31 is configured to determine that the finger of the user is positioned substantially perpendicularly to the surface of the image 1a if Xᵤₚ - X_{down} = 0.

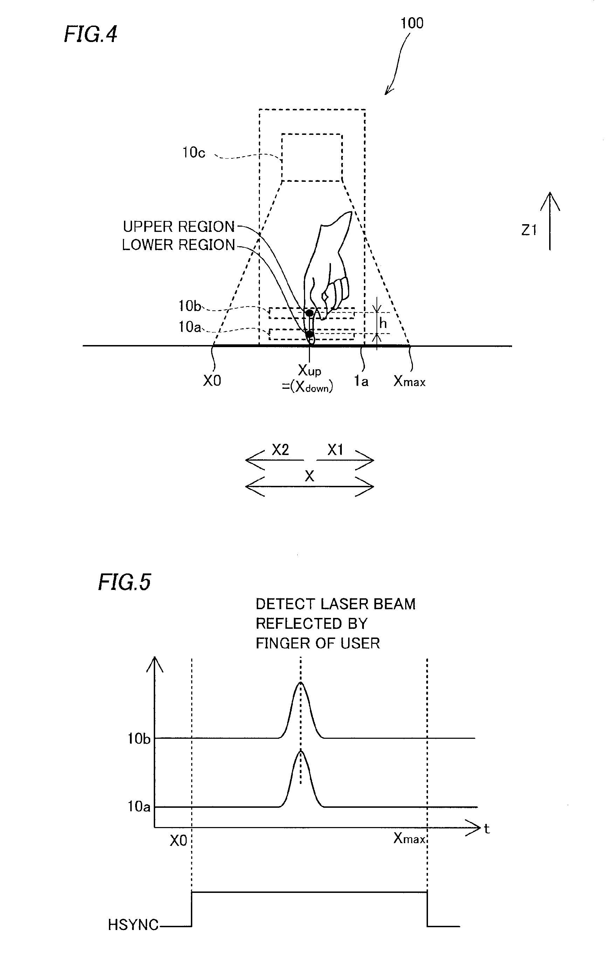

A case of acquiring the inclination of the finger of the user in the horizontal direction (direction X) is now described in detail. If the finger of the user is positioned substantially perpendicularly to the horizontal direction (direction X) of the surface of the image 1a as shown in Fig. 4, the timing (time t) of incidence of the infrared laser beam reflected by the finger of the user detected by the infrared detector 10a is substantially coincident with that detected by the infrared detector 10b as shown in Fig. 5. At this time, the control portion 31 acquires planar coordinates corresponding to the lower region and the upper region of the finger of the user at the time of incidence of the infrared laser beam reflected by the finger of the user. Then, the control portion 31 calculates the inclination of the finger of the user on the basis of a value of a difference between the coordinate in the direction X corresponding to the lower region of the finger of the user and the coordinate in the direction X corresponding to the upper region of the finger of the user. In other words, the control portion 31 determines that the coordinate Xᵤₚ in the direction X corresponding to the upper region of the finger of the user is equal to the coordinate X_{down} in the direction X corresponding to the lower region of the finger of the user so that Xᵤₚ - X_{down} = 0 if the finger of the user is positioned substantially perpendicularly (along arrow Z1) to the surface of the image 1a. Thus, the control portion 31 determines that the finger of the user is positioned substantially perpendicularly (along arrow Z1) to the surface of the image 1a.

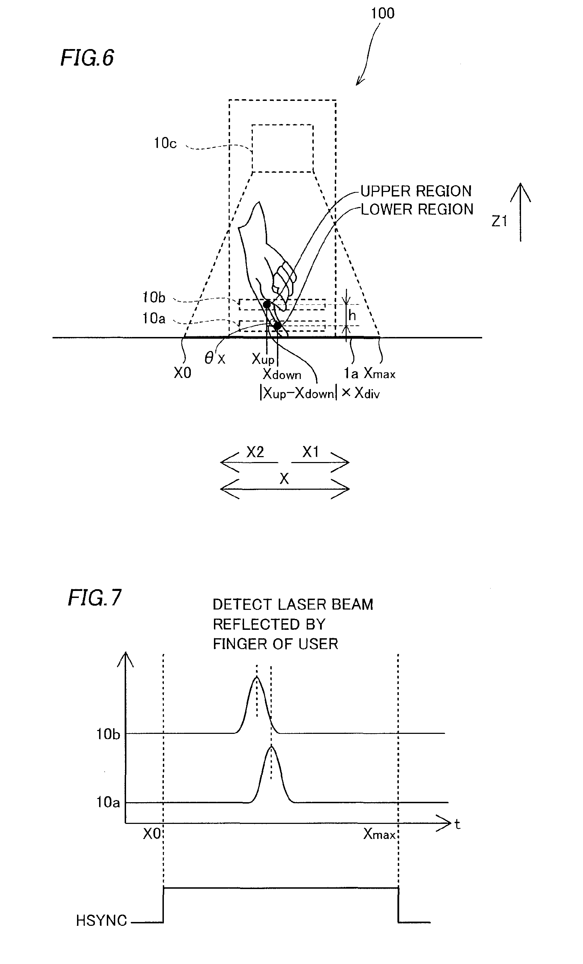

If the finger of the user is tilted to the left side (along arrow X2) with respect to the surface of the image 1a as shown in Fig. 6, the timing of incidence of the infrared laser beam reflected by the upper region of the finger of the user upon the infrared detector 10b is faster than the timing of incidence of the infrared laser beam reflected by the lower region of the finger of the user upon the infrared detector 10a as shown in Fig. 7. In other words, the control portion 31 determines that the coordinate Xᵤₚ in the direction X corresponding to the upper region of the finger of the user is smaller than the coordinate X_{down} in the direction X corresponding to the lower region of the finger of the user so that Xᵤₚ - X_{down} < 0. Thus, the control portion 31 determines that the finger of the user is tilted to the left side (along arrow X2).

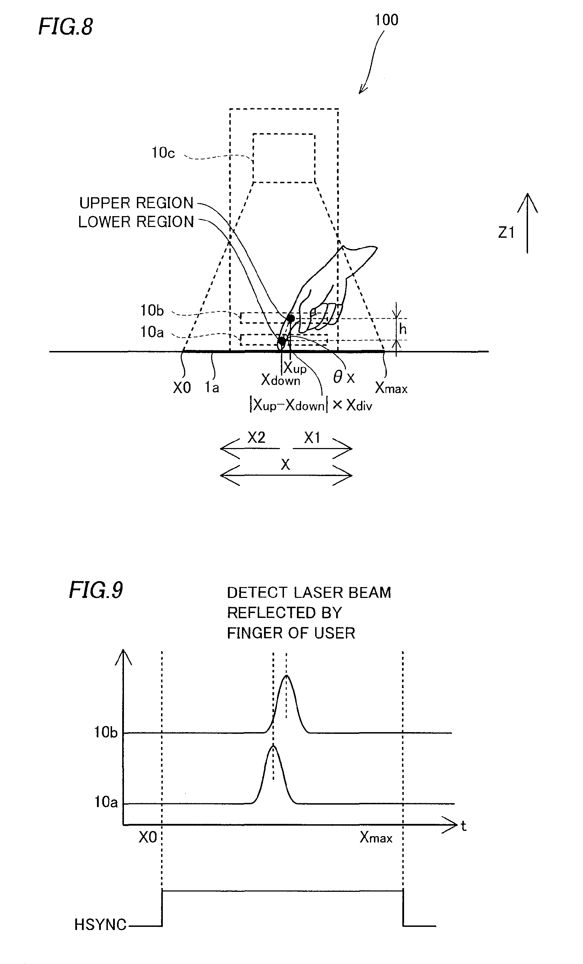

If the finger of the user is tilted to the right side (along arrow X1) with respect to the surface of the image 1a as shown in Fig. 8, the timing of incidence of the infrared laser beam reflected by the upper region of the finger of the user upon the infrared detector 10b is slower than the timing of incidence of the infrared laser beam reflected by the lower region of the finger of the user upon the infrared detector 10a as shown in Fig. 9. In other words, the control portion 31 determines that the coordinate Xᵤₚ in the direction X corresponding to the upper region of the finger of the user is larger than the coordinate X_{down} in the direction X corresponding to the lower region of the finger of the user so that Xᵤₚ - X_{down} > 0. Thus, the control portion 31 determines that the finger of the user is tilted to the right side (along arrow X1).

The inclination θ_{Y} [degree] of the finger of the user in the vertical direction (direction Y) is calculated according to a formula θ_{Y} = tan⁻¹(h/((|Yᵤₚ - Y_{offset} - Y_{down}| × Y_{div}))), where a coordinate in the direction Y corresponding to the upper region of the finger of the user is Yᵤₚ, a coordinate in the direction Y corresponding to the lower region of the finger of the user is Y_{down}, a distance between the infrared detectors 10a and 10b is h [mm], and the amount of deviation between the timing of incidence of the infrared laser beam reflected by the lower region of the finger of the user and the timing of incidence of the infrared laser beam reflected by the upper region of the finger of the user is Y_{offset}. The distance Y_{div} in the direction Y per coordinate is calculated according to a formula Y_{div} [mm] = Yₗₙ [mm]/Yₘₐₓ. The control portion 31 is configured to determine that the finger of the user is tilted to the rear side (along arrow Y2) if (Yᵤₚ - Y_{offset}) - Y_{down} < 0 and determine that the finger of the user is tilted to the front side (along arrow Y1) if (Yᵤₚ - Y_{offset}) - Y_{down} > 0. Furthermore, the control portion 31 is configured to determine that the finger of the user is positioned substantially perpendicularly to the surface of the image 1a if (Yᵤₚ - Y_{offset}) - Y_{down} = 0.

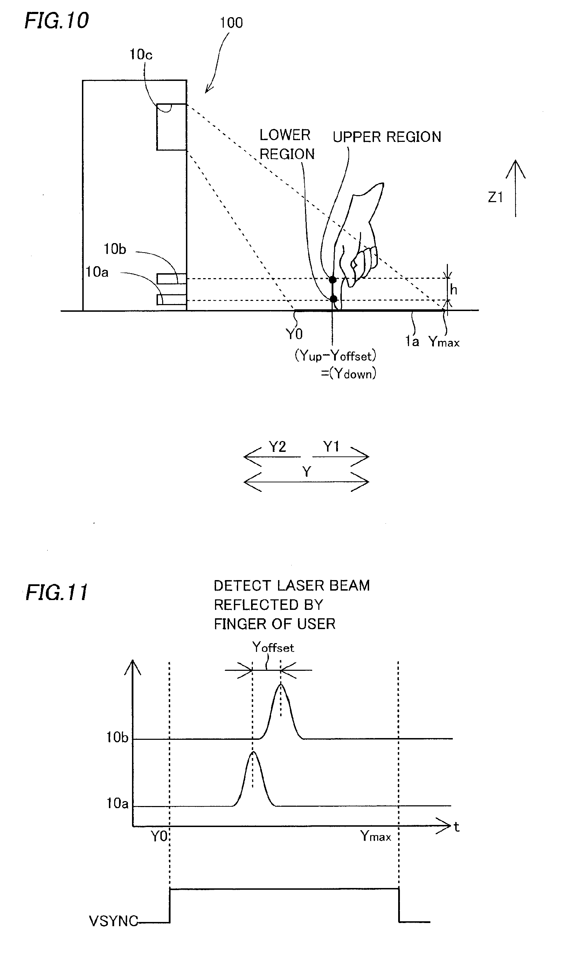

A case of acquiring the inclination of the finger of the user in the vertical direction (direction Y) is now described in detail. If the finger of the user is positioned substantially perpendicularly (along arrow Z1) to the vertical direction (direction Y) of the surface of the image 1a as shown in Fig. 10, the timing of incidence of the infrared laser beam reflected by the lower region of the finger of the user detected by the infrared detector 10a deviates from the timing of incidence of the infrared laser beam reflected by the upper region of the finger of the user detected by the infrared detector 10b as shown in Fig. 11. In other words, the control portion 31 determines that the coordinate Yᵤₚ - Y_{offset} in the direction Y corresponding to the upper region of the finger of the user is equal to the coordinate Y_{down} in the direction Y corresponding to the lower region of the finger of the user so that (Yᵤₚ - Y_{offset}) - Y_{down} = 0 if the finger of the user is positioned substantially perpendicularly to the surface of the image 1a. Thus, the control portion 31 determines that the finger of the user is positioned substantially perpendicularly (along arrow Z1) to the surface of the image 1a.

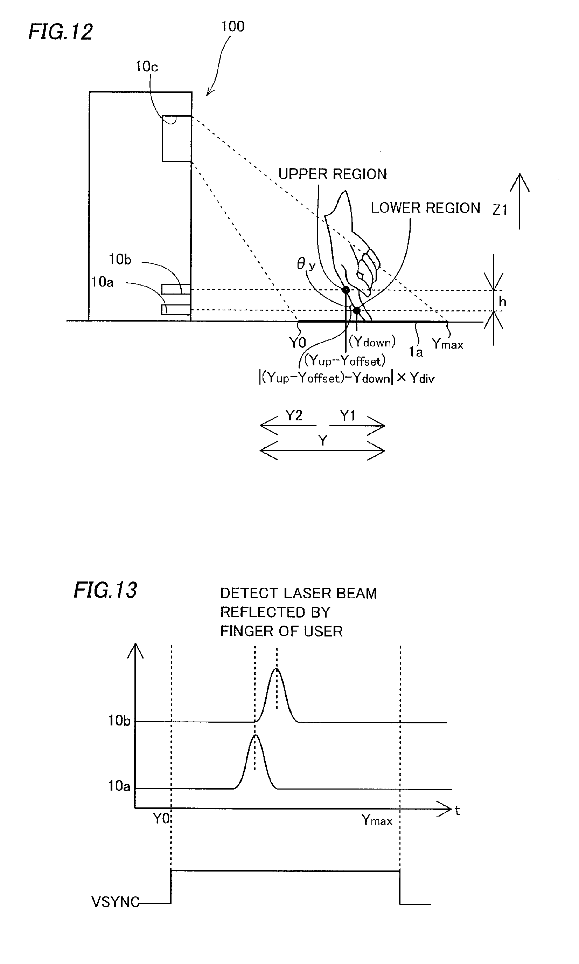

If the finger of the user is tilted to the rear side (along arrow Y2) with respect to the surface of the image 1a as shown in Fig. 12, the timing of incidence of the infrared laser beam reflected by the upper region of the finger of the user upon the infrared detector 10b is slower than the timing of incidence of the infrared laser beam reflected by the lower region of the finger of the user upon the infrared detector 10a as shown in Fig. 13. In this case, Y_{offset} in a state where the finger of the user is positioned substantially perpendicularly to the surface of the image 1a is subtracted from the timing of incidence detected by the infrared detector 10b, whereby the timing of incidence of the infrared laser beam reflected by the upper region of the finger of the user upon the infrared detector 10b is faster than the timing of incidence of the infrared laser beam reflected by the lower region of the finger of the user upon the infrared detector 10a. In other words, the control portion 31 determines that the coordinate Yᵤₚ - Y_{offset} in the direction Y corresponding to the upper region of the finger of the user is smaller than the coordinate Y_{down} in the direction Y corresponding to the lower region of the finger of the user so that (Yᵤₚ - Y_{offset}) - Y_{down} < 0. Thus, the control portion 31 determines that the finger of the user is tilted to the rear side (along arrow Y2).

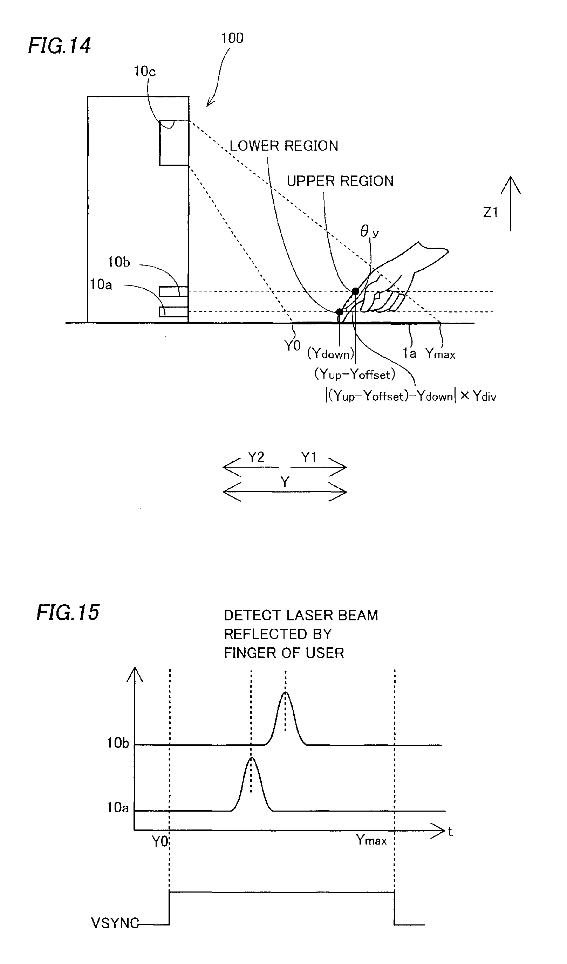

If the finger of the user is tilted to the front side (along arrow Y1) with respect to the surface of the image 1a as shown in Fig. 14, the timing of incidence of the infrared laser beam reflected by the upper region of the finger of the user upon the infrared detector 10b is slower than the timing of incidence of the infrared laser beam reflected by the lower region of the finger of the user upon the infrared detector 10a as shown in Fig. 15. In this case, the control portion 31 determines that the coordinate Yᵤₚ - Y_{offset} in the direction Y corresponding to the upper region of the finger of the user is larger than the coordinate Y_{down} in the direction Y corresponding to the lower region of the finger of the user so that (Yᵤₚ - Y_{offset}) - Y_{down} > 0. Thus, the control portion 31 determines that the finger of the user is tilted to the front side (along arrow Y1).

The control portion 31 controls the image 1a projected on the table 1 to correspond to the calculated inclinations of the finger of the user. For example, the control portion 31 displays a pointer on the image 1a if the finger of the user continuously presses the image 1a for a prescribed time. The control portion 31 performs control of scrolling the image 1a in the tilt direction of the finger of the user if the finger of the user is kept tilted in the horizontal direction or the vertical direction with respect to the table 1 (image 1a) for a prescribed time. The control portion 31 performs control of cancelling a selection of a key of a keyboard if the finger of the user is tilted in a prescribed direction while selecting the key of the keyboard, and thereafter returned to its angle at the time when the key of the keyboard has been selected, when the keyboard is displayed on the image 1a. Furthermore, the control portion 31 performs control of displaying a menu screen on a region around a continuously pressed portion if the user continuously presses an icon or the like displayed on the image 1a with his/her finger and performs control of selecting and deciding a content of the menu screen in the tilt direction of the finger of the user if the finger of the user is tilted. As described above, the inclinations of the finger of the user in the horizontal direction and the vertical direction are detected, whereby the finger of the user can be employed as a joystick serving as an input device.

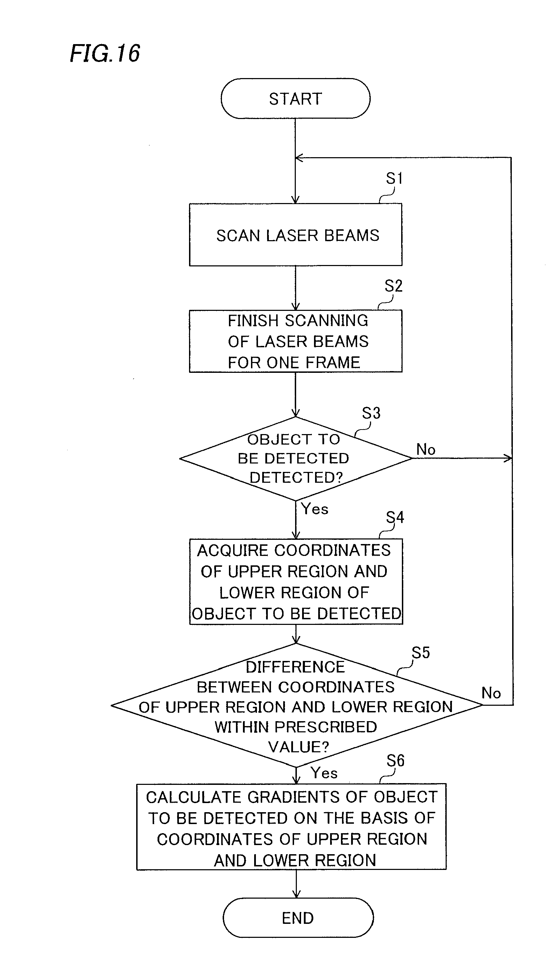

Next, control operations for calculating the inclination of the finger of the user (object to be detected) with respect to the surface of the table 1 on which the image 1a is projected are described with reference to Fig. 16.

First, the red, green, blue, and infrared laser beams emitted from the red LD 61a, the green LD 62a, the blue LD 63a, and the infrared LD 64a are scanned by the MEMS mirror 69a at a step S1, whereby the images 1a and 2a are projected on the table 1 and the screen 2, respectively.

Then, scanning of the laser beams for one frame is finished at a step S2, and thereafter the control portion 31 determines whether or not there is the finger of the user (object to be detected) in the projection region of the image 1a at a step S3. If the infrared detectors 10a and 10b detect no infrared laser beam, the control portion 31 determines that there is not the finger of the user in the projection region of the image 1a, and the process returns to the step S1. At the step S3, if the infrared detectors 10a and 10b detect the infrared laser beam reflected by the finger of the user, the control portion 31 determines that there is the finger of the user in the projection region of the image 1a, and the process advances to a step S4.

At the step S4, the coordinates in the horizontal direction and the vertical direction of the upper region and the lower region of the finger of the user are acquired. At this time, the coordinates of the finger of the user in the horizontal direction (direction X) and the vertical direction (direction Y) are acquired on the basis of the scanning signals (HSYNCs and VSYNCs) in the horizontal direction (direction X) and the vertical direction (direction Y) of the laser beams emitted from the red LD 61a, the green LD 62a, and the blue LD 63a at the time when the infrared detectors 10a and 10b detect the infrared laser beam reflected by the finger of the user.

Then, the control portion 31 determines whether or not the difference ((Xᵤₚ - X_{down}) or (Yᵤₚ - Y_{down})) between the coordinate of the upper region of the finger of the user and the coordinate of the lower region of the finger of the user is within a prescribed value (preset value) at a step S5. Specifically, at the step S5, if the difference between the coordinate of the upper region of the finger of the user and the coordinate of the lower region of the finger of the user is relatively large, the control portion 31 determines that more than one object to be detected has been detected (the object to be detected that has been detected is not the finger of the user), and the process returns to the step S1. At the step S5, if the difference between the coordinate of the upper region of the finger of the user and the coordinate of the lower region of the finger of the user is within the prescribed value, the control portion 31 determines that one object to be detected has been detected (the object to be detected that has been detected is the finger of the user), and the process advances to a step S6.

According to the first embodiment, at the step S6, the inclinations of the finger of the user in the horizontal direction and the vertical direction with respect to the surface of the table 1 on which the image 1a is projected are calculated on the basis of the coordinates in the horizontal direction and the vertical direction of the upper region and the lower region of the finger of the user. Specifically, at the step S6, the inclination θ_{X} [degree] of the finger of the user in the direction X is calculated according to the formula θ_{X} = tan⁻¹(h/((|Xᵤₚ - X_{down}| × X_{div}))), and the inclination θ_{Y} [degree] of the finger of the user in the direction Y is calculated according to the formula θ_{Y} = tan⁻¹(h/((|Yᵤₚ - Y_{offset} - Y_{down} × Y_{div}))). Thereafter, the control portion 31 controls the image 1a projected on the table 1 to correspond to the calculated inclinations of the finger of the user in the horizontal direction and the vertical direction.

According to the first embodiment, as hereinabove described, the inclination of the finger of the user with respect to the table 1 is acquired on the basis of the infrared laser beam detected by the infrared detectors 10a and 10b, whereby in addition to the image 1a based on the coordinates of the finger of the user in the plane of the table 1, the image 1a based on the state of the finger of the user other than the coordinates thereof in the plane of the table 1 can be controlled. Thus, the finger of the user is tilted to the upper side (along arrow Y2) or lower side (along arrow Y1) of the image 1a on the image 1a projected on the table 1, whereby the image 1a can be scrolled to the upper side or lower side to correspond to the inclination of the finger of the user. Consequently, types of images controllable on the basis of the inclination of the finger of the user can be increased.

According to the first embodiment, as hereinabove described, the control portion 31 performing control of acquiring the coordinates of the lower region and the upper region of the finger of the user in the height direction on the basis of the timing of incidence of the laser beam detected by the infrared detectors 10a and 10b and acquiring the inclination of the finger of the user with respect to the table 1 from the coordinates of the lower region and the upper region of the finger of the user is provided, whereby the inclination of the finger of the user can be easily detected using the coordinates of the lower region and the upper region of the finger of the user in the height direction.

According to the first embodiment, as hereinabove described, the difference between the coordinates of the lower region and the upper region of the finger of the user in the height direction acquired on the basis of the timing of incidence of the laser beam detected by the infrared detectors 10a and 10b is detected, and the inclination of the finger of the user with respect to the table 1 is acquired from the difference between the coordinates of the lower region and the upper region of the finger of the user, whereby the inclination of the finger of the user with respect to the table 1 can be easily detected using the difference between the coordinates of the lower region and the upper region of the finger of the user in the height direction.

According to the first embodiment, as hereinabove described, coordinates based on the scanning signals of the laser beams emitted from the red LD 61a, the green LD 62a, and the blue LD 63a at the time when the infrared detectors 10a and 10b detect the infrared laser beam reflected by the finger of the user are acquired as the coordinates of the upper region and the lower region of the finger of the user in the height direction (along arrow Z1), whereby the inclination of the finger of the user with respect to the surface of the table 1 can be easily detected using the coordinates of the upper region and the lower region of the finger of the user in the height direction, dissimilarly to a case where only the coordinates of the finger of the user in the plane of the table 1 can be detected.

According to the first embodiment, as hereinabove described, the coordinates of the upper region and the lower region of the finger of the user are detected on the basis of the timing of incidence of the infrared laser beam detected by the infrared detectors 10a and 10b, and the inclination of the finger of the user with respect to the table 1 is acquired from the coordinates of the upper region and the lower region of the finger of the user, whereby the inclination of the finger of the user with respect to the table 1 can be easily acquired from the coordinates of the upper region and the lower region having heights different from each other, and the display contents of the image 1a projected on the table 1 can be controlled to correspond to the acquired inclination of the finger of the user.

According to the first embodiment, as hereinabove described, the coordinates in the horizontal direction of the upper region and the lower region of the finger of the user are detected on the basis of the scanning signals in the horizontal direction of the laser beams emitted from the red LD 61a, the green LD 62a, and the blue LD 63a while the coordinates in the vertical direction of the upper region and the lower region of the finger of the user are detected on the basis of the scanning signals in the vertical direction of the laser beams emitted from the red LD 61a, the green LD 62a, and the blue LD 63a, whereby the inclination of the finger of the user with respect to the surface of the table 1 can be easily acquired from the coordinates in the horizontal direction and the vertical direction of the upper region and the lower region of the finger of the user.

According to the first embodiment, as hereinabove described, the tilt angle in the horizontal direction of the finger of the user with respect to the surface of the table 1 is acquired on the basis of the value of the difference between the coordinates in the horizontal direction of the lower region and the upper region of the finger of the user. Thus, the control portion 31 can determine that the finger of the user is positioned substantially perpendicularly to the surface of the table 1 if the value of the difference between the coordinates in the horizontal direction of the lower region and the upper region of the finger of the user is zero, and determine that the finger of the user is tilted in the horizontal direction (lateral direction) with respect to the surface of the table 1 if the value of the difference between the coordinates in the horizontal direction of the lower region and the upper region of the finger of the user is not zero.

According to the first embodiment, as hereinabove described, the control portion 31 is configured to perform control of determining that the finger of the user is tilted to one side in the horizontal direction if the value of the difference between the coordinates in the horizontal direction of the lower region and the upper region of the finger of the user is either one of positive and negative values, and determining that the finger of the user is tilted to the other side in the horizontal direction if the value of the difference between the coordinates in the horizontal direction of the lower region and the upper region of the finger of the user is the other one of positive and negative values. Thus, the control portion 31 can easily determine which side in the horizontal direction the finger of the user is tilted to.

According to the first embodiment, as hereinabove described, the amount of deviation between the timing of incidence of the laser beam reflected by the lower region detected by the infrared detector 10a and the timing of incidence of the laser beam reflected by the upper region detected by the infrared detector 10b in a state where the finger of the user is positioned substantially perpendicularly to the surface of the table 1 is set as an offset value (Y_{offset}) when the timing of incidence of the laser beam reflected by the lower region of the finger of the user upon the infrared detector 10a deviates from the timing of incidence of the laser beam reflected by the upper region of the finger of the user upon the infrared detector 10b in the state where the finger of the user is positioned substantially perpendicularly to the surface of the table 1, and the tilt angle in the vertical direction of the finger of the user with respect to the surface of the table 1 is acquired on the basis of a value obtained by subtracting the offset value and the coordinate in the vertical direction of the lower region of the finger of the user from the coordinate in the vertical direction of the upper region of the finger of the user when the finger of the user is tilted in the vertical direction. Thus, the control portion 31 can determine that the finger of the user is positioned substantially perpendicularly to the surface of the table 1 if the value obtained by subtracting the offset value and the coordinate in the vertical direction of the lower region of the finger of the user from the coordinate in the vertical direction of the upper region of the finger of the user is zero, and determine that the finger of the user is tilted in the vertical direction (longitudinal direction) with respect to the surface of the table 1 if the value obtained by subtracting the offset value and the coordinate in the vertical direction of the lower region of the finger of the user from the coordinate in the vertical direction of the upper region of the finger of the user is not zero.

According to the first embodiment, as hereinabove described, the control portion 31 is configured to perform control of determining that the finger of the user is tilted to one side in the vertical direction if the value obtained by subtracting the offset value and the coordinate in the vertical direction of the lower region of the finger of the user from the coordinate in the vertical direction of the upper region of the finger of the user is either one of positive and negative values, and determining that the finger of the user is tilted to the other side in the vertical direction if the value obtained by subtracting the offset value and the coordinate in the vertical direction of the lower region of the finger of the user from the coordinate in the vertical direction of the upper region of the finger of the user is the other one of positive and negative values. Thus, the control portion 31 can easily determine which side in the vertical direction the finger of the user is tilted to.

According to the first embodiment, as hereinabove described, the control portion 31 is configured to perform control of determining that the object that has been detected is the finger of the user if a value of the difference between the coordinates in the horizontal direction or the vertical direction of the upper region and the lower region of the finger of the user is within the preset value. Thus, the control portion 31 can easily distinguish the finger of the user from an object other than the finger of the user.

According to the first embodiment, as hereinabove described, the height of the infrared detector 10b from the surface of the table 1 is larger than the height of the infrared detector 10a from the surface of the table 1. Thus, the laser beam reflected by the lower region of the finger of the user and the laser beam reflected by the upper region of the finger of the user having the height from the table 1 higher than that of the lower region of the finger of the user can be easily detected.

According to the first embodiment, as hereinabove described, the coordinates of the lower region and the upper region of the finger of the user in the height direction are detected on the basis of the timing of incidence of the infrared laser beam detected by the infrared detectors 10a and 10b, and the inclination of the finger of the user with respect to the table 1 is acquired from the coordinates of the lower region and the upper region of the finger of the user. Thus, the infrared laser beam is reflected by the finger of the user so that the inclination of the finger of the user can be easily acquired even if a black image is projected on the table 1, dissimilarly to a case where the finger of the user is detected with the red, green, and blue laser beams.

According to the first embodiment, as hereinabove described, the visible light filter 10d is provided on the infrared detectors 10a and 10b to cut the visible laser beams. Thus, the visible laser beams are inhibited from entering the infrared detectors 10a and 10b, and hence the accuracy of detection of the infrared laser beam can be improved.

According to the first embodiment, as hereinabove described, the visible (red, green, and blue) laser beams emitted from the red LD 61a, the green LD 62a, and the blue LD 63a and the infrared laser beam emitted from the infrared LD 64a are scanned along the same scanning path. Thus, the planar positions (coordinates) of the visible laser beams emitted to the table 1 and the planar position (coordinates) of the infrared laser beam emitted to the table 1 can be substantially coincident with each other.

### (Second Embodiment)

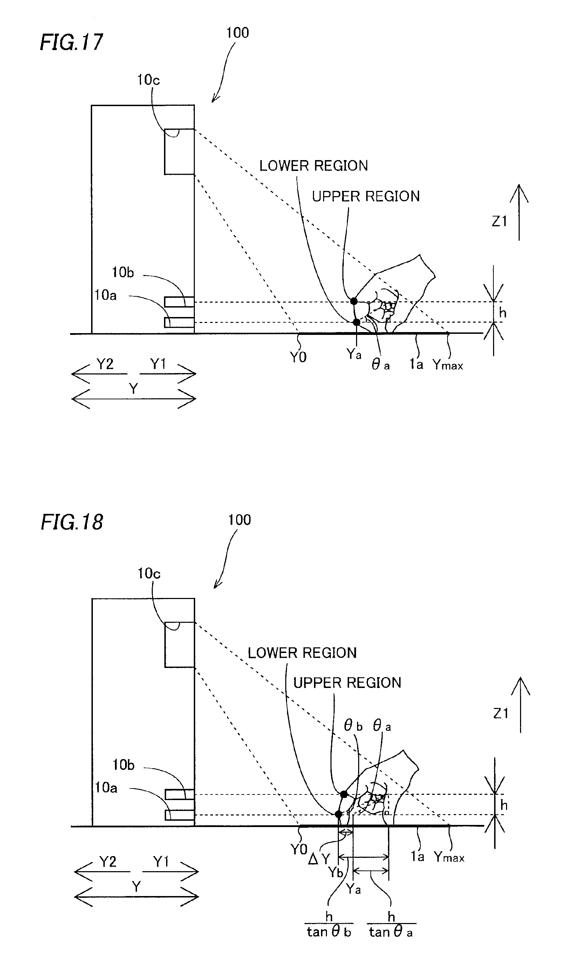

A second embodiment is now described with reference to Figs. 17 to 19. In this second embodiment, multi-touch in which a user manipulates an image with his/her two fingers (the forefinger and the thumb) is described, dissimilarly to the aforementioned first embodiment in which the case where the inclination of the finger (forefinger) of the user is acquired (calculated) is described. In the second embodiment, a case where the thumb of the user hides in the forefinger of the user so that infrared detectors 10a and 10b cannot detect the thumb of the user when an image 1a projected on a table 1 is manipulated by the two fingers (the forefinger and the thumb) of the user is described.

As shown in Figs. 17 and 18, the infrared detectors 10a and 10b are configured to be capable of detecting infrared light reflected by the forefinger of the user. The thumb of the user is positioned on the side along arrow Y1 with respect to the forefinger of the user, whereby it is assumed that the thumb of the user is positioned in an area where no infrared laser beam is emitted. In other words, the coordinates and the inclination of the thumb of the user are directly detected in this state.

According to the second embodiment, a control portion 31 is configured to determine whether or not the user has made a multi-touch gesture on the basis of a change in the inclination of the forefinger of the user if the user moves his/her forefinger from the side along arrow Y1 (see Fig. 17) to the side along arrow Y2 (see Fig. 18) using his/her thumb as a supporting point (axis).

Specifically, the control portion 31 is configured to acquire the moving distance ΔY of the forefinger of the user in a vertical direction (direction Y) acquired on the basis of a change in the tilt angle of the forefinger of the user and the moving distance ΔY_{L} of the forefinger of the user in the vertical direction (direction Y) acquired on the basis of a change in the coordinate of the forefinger of the user if the infrared detectors 10a and 10b detect a change in the tilt angle of the forefinger of the user with respect to a surface of the image 1a. The moving distance ΔY of the forefinger of the user acquired on the basis of a change from the tilt angle θₐ (before movement) of the forefinger of the user to the tilt angle θ_{b} (after movement) of the forefinger of the user is calculated according to a formula ΔY = (h/tanθ_{b}) - (h/tanθₐ) = (h(tanθₐ - tanθ_{b}))/(tanθₐ × tanθ_{b}). The moving distance ΔY_{L} of the forefinger of the user acquired on the basis of a change from the coordinate Yₐ (before movement) of the forefinger of the user to the coordinate Y_{b} (after movement) of the forefinger of the user is calculated according to a formula ΔY_{L} = Y_{div} (Yₐ - Y_{b}).

The control portion 31 is configured to determine whether or not the user has made a multi-touch gesture on the basis of the result of comparison between the moving distance ΔY of the forefinger of the user acquired on the basis of the change from the tilt angle θₐ of the forefinger of the user to the tilt angle θ_{b} of the forefinger of the user and the moving distance ΔY_{L} of the forefinger of the user acquired on the basis of the change from the coordinate Yₐ of the forefinger of the user to the coordinate Y_{b} of the forefinger of the user. The control portion 31 is configured to determine that the user has made a multi-touch gesture if a formula ΔY - error ≤ ΔY_{L} ≤ ΔY + error (the error is a prescribed value) is satisfied. In other words, the control portion 31 is configured to determine that the user has made a multi-touch gesture if the moving distance ΔY of the forefinger of the user acquired on the basis of the change from the tilt angle θₐ of the forefinger of the user to the tilt angle θ_{b} of the forefinger of the user is substantially equal to the moving distance ΔY_{L} of the forefinger of the user acquired on the basis of the change from the coordinate Yₐ of the forefinger of the user to the coordinate Y_{b} of the forefinger of the user. The remaining structure of the second embodiment is similar to that of the aforementioned first embodiment.

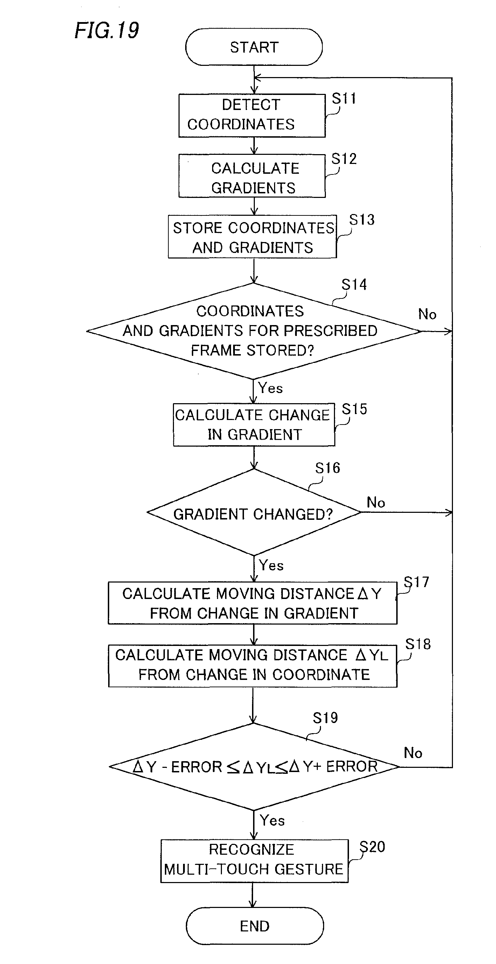

Next, control operations for determining whether or not the user has made a multi-touch gesture are described with reference to Fig. 19.

First, the coordinates in a horizontal direction and the vertical direction of an upper region and a lower region of the forefinger of the user are detected at a step S110. Then, the inclinations of the forefinger of the user in the horizontal direction and the vertical direction with respect to the surface of the image 1a are calculated on the basis of the detected coordinates at a step S12.

Then, data regarding the detected coordinates in the horizontal direction and the vertical direction of the upper region and the lower region of the forefinger of the user and the calculated inclinations of the forefinger of the user is stored in an SD-RAM 33 at a step S13. Then, the control portion 31 determines whether or not data regarding the coordinates in the horizontal direction and the vertical direction of the upper region and the lower region of the forefinger of the user and the inclinations of the forefinger of the user for a prescribed frame is stored in the SD-RAM 33 at a step S14. If the control portion 31 determines that the data regarding the coordinates and inclinations of the forefinger of the user for the prescribed frame is not stored at the step S14, the process returns to the step S11. If the control portion 31 determines that the data regarding the coordinates and inclinations of the forefinger of the user for the prescribed frame is stored at the step S14, the process advances to a step S15.

According to the second embodiment, the change in the inclination of the forefinger of the user in the vertical direction (direction Y) is calculated at the step S15, and the control portion 31 determines whether or not the calculated change in the inclination of the forefinger of the user is larger than a prescribed value at a step S16. At the step S16, if determining that the calculated change in the inclination of the forefinger of the user is smaller than the prescribed value, the control portion 31 determines that the forefinger of the user has not been moved, and the process returns to the step S11. At the step S16, if determining that the calculated change in the inclination of the forefinger of the user is larger than the prescribed value, the control portion 31 determines that the forefinger of the user has been moved, and the process advances to a step S17.

According to the second embodiment, the moving distance ΔY of the forefinger of the user acquired on the basis of the change from the tilt angle θₐ in the vertical direction (direction Y) before movement of the forefinger of the user to the tilt angle θ_{b} in the vertical direction after movement of the forefinger of the user is calculated at the step S17. The moving distance ΔY is calculated according to the formula ΔY = (h(tanθₐ - tanθ_{b}))/(tanθₐ × tanθ_{b}).

According to the second embodiment, the moving distance ΔY_{L} of the forefinger of the user acquired on the basis of the change from the coordinate Yₐ in the vertical direction (direction Y) before movement of the lower region of the forefinger of the user to the coordinate Y_{b} in the vertical direction after movement of the lower region of the forefinger of the user is calculated at a step S18. The moving distance ΔY_{L} is calculated according to the formula ΔY_{L} = Y_{div}(Yₐ - Y_{b}).

Thereafter, at a step S19, if the calculated moving distance ΔY and moving distance ΔY_{L} do not satisfy the formula ΔY - error ≤ ΔY_{L} ≤ ΔY + error (the error is a prescribed value), the control portion 31 determines that the user has not made a multi-touch gesture, and the process returns to the step S11. At the step S19, if the calculated moving distance ΔY and moving distance ΔY_{L} satisfy the formula ΔY - error ≤ ΔY_{L} ≤ ΔY + error (the error is a prescribed value), the process advances to a step S20, and the control portion 31 determines that the user has made a multi-touch gesture. Thereafter, the control portion 31 controls the contents of the image 1a to correspond to the multi-touch gesture of the user.

According to the second embodiment, as hereinabove described, if the infrared detectors 10a and 10b detect the change in the tilt angle of the forefinger of the user with respect to the surface of the table 1, the control portion 31 compares the moving distance ΔY of the forefinger of the user acquired on the basis of the change in the tilt angle of the forefinger of the user with respect to a surface of the table 1 with the moving distance ΔY_{L} of the forefinger of the user acquired on the basis of the change in the coordinate of the forefinger of the user, and determines whether or not the image 1a projected on the table 1 has been manipulated by the two fingers (the forefinger and the thumb) of the user on the basis of the comparison result. Thus, when the image 1a projected on the table 1 is manipulated by the two fingers (the forefinger and the thumb) of the user, the control portion 31 can infer whether or not the image 1a projected on the table 1 has been manipulated by the two fingers (the forefinger and the thumb) of the user on the basis of the comparison between the moving distance ΔY of the forefinger of the user acquired on the basis of the change in the tilt angle of the forefinger of the user with respect to the surface of the table 1 and the moving distance ΔY_{L} of the forefinger of the user acquired on the basis of the change in the coordinate of the forefinger of the user even if the forefinger of the user can be detected by the infrared detectors 10a and 10b while the thumb of the user cannot be detected by the infrared detectors 10a and 10b because of hiding in the forefinger of the user.

The remaining effects of the second embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the infrared laser beam reflected by the finger of the user is detected by the two infrared detectors 10a and 10b in each of the aforementioned first and second embodiments, the present invention is not restricted to this. For example, an infrared laser beam reflected by three or more regions of the finger of the user may alternatively be detected by three or more infrared detectors. Furthermore, one detector may alternatively be employed so far as the same can detect an infrared laser beam reflected by two or more regions of the finger of the user.

While the infrared laser beam (invisible laser beam) reflected by the finger of the user is detected to acquire the coordinates of the finger of the user in each of the aforementioned first and second embodiments, the present invention is not restricted to this. For example, red, green, and blue laser beams (visible laser beams) reflected by the finger of the user may alternatively be detected to acquire the coordinates of the finger of the user.

While the inclinations of the finger of the user are calculated on the basis of the coordinates of the finger of the user on the image 1a (projection region) in each of the aforementioned first and second embodiments, the present invention is not restricted to this. For example, the inclinations of the finger of the user may alternatively be calculated on the basis of positional information other than the coordinates.

While the red LD, the green LD, the blue LD, and the infrared LD are employed as the examples of the laser beam emitting portion according to the present invention in each of the aforementioned first and second embodiments, the present invention is not restricted to this. For example, a laser beam emitting portion other than the red LD, the green LD, the blue LD, and the infrared LD is also applicable so far as the same can emit a laser beam.

While the finger of the user is employed as an example of the object to be detected according to the present invention in each of the aforementioned first and second embodiments, the present invention is not restricted to this. For example, in addition to the finger of the user, a dedicated stylus pen or the like is also applicable so far as the user can manipulate the image projected on the projection region with the same, and the same can reflect a detection laser beam employed to detect the positional information of the object to be detected.

## Claims

1. A projector (100) comprising:
a laser beam emitting portion (61a, 62a, 63a, 64a) emitting laser beams;
a projection portion (69a) projecting an image on an arbitrary projection region (1) by scanning said laser beams emitted from said laser beam emitting portion; and
a detecting portion (10a, 10b) detecting a laser beam reflected by an object to be detected of said laser beams emitted from said laser beam emitting portion,
the projector configured to acquire an inclination of said object to be detected with respect to said projection region on the basis of said laser beam detected by said detecting portion.

2. The projector according to claim 1, further comprising a control portion (31) that performs control of acquiring positional information of a plurality of regions of said object to be detected in a height direction on the basis of timing of incidence of said laser beam detected by said detecting portion and acquiring said inclination of said object to be detected with respect to said projection region from said positional information of said plurality of regions.

3. The projector according to claim 2, wherein
said control portion is configured to perform control of detecting a difference between said positional information of said plurality of regions of said object to be detected in said height direction acquired on the basis of said timing of incidence of said laser beam detected by said detecting portion, and acquiring said inclination of said object to be detected with respect to said projection region from said difference between said positional information of said plurality of regions.

4. The projector according to claim 2, wherein
said control portion is configured to perform control of acquiring coordinates of said plurality of regions of said object to be detected in said height direction based on scanning signals of said laser beams emitted from said laser beam emitting portion at the time when said detecting portion detects said laser beam reflected by said object to be detected as said positional information of said plurality of regions.

5. The projector according to claim 2, wherein
said detecting portion includes a first detector (10a) detecting said laser beam reflected by a first region of said object to be detected and a second detector (10b) detecting said laser beam reflected by a second region of said object to be detected having a height from said projection region higher than that of said first region, and
said control portion is configured to perform control of detecting positional information of said first region and positional information of said second region on the basis of timing of incidence of said laser beam detected by said first detector and timing of incidence of said laser beam detected by said second detector, and acquiring said inclination of said object to be detected with respect to said projection region from said positional information of said first region and said positional information of said second region.

6. The projector according to claim 5, wherein
said projection portion is configured to continuously alternately scan said laser beams in a horizontal direction that is a lateral direction and a vertical direction that is a longitudinal direction in a plane of said projection region, and
said control portion is configured to perform control of detecting positional information in said horizontal direction of said first region and said second region of said object to be detected on the basis of scanning signals in said horizontal direction of said laser beams emitted from said laser beam emitting portion, and detecting positional information in said vertical direction of said first region and said second region of said object to be detected on the basis of scanning signals in said vertical direction of said laser beams emitted from said laser beam emitting portion.

7. The projector according to claim 6, wherein
said detecting portion is configured to detect said laser beam reflected by said first region of said object to be detected and said laser beam reflected by said second region of said object to be detected such that timing of incidence of said laser beam reflected by said first region of said object to be detected and timing of incidence of said laser beam reflected by said second region of said object to be detected are coincident with each other when said object to be detected is positioned perpendicularly to a surface of said projection region, and
said control portion is configured to perform control of acquiring a tilt angle in said horizontal direction of said object to be detected with respect to said surface of said projection region on the basis of a value of a difference between said positional information in said horizontal direction of said first region of said object to be detected and said positional information in said horizontal direction of said second region of said object to be detected when said object to be detected is tilted in said horizontal direction.

8. The projector according to claim 7, wherein
said control portion is configured to perform control of determining that said object to be detected is tilted to one side in said horizontal direction if said value of said difference between said positional information in said horizontal direction of said first region of said object to be detected and said positional information in said horizontal direction of said second region of said object to be detected is either one of positive and negative values, and determining that said object to be detected is tilted to the other side in said horizontal direction if said value of said difference is the other one of positive and negative values.

9. The projector according to claim 6, wherein
said control portion is configured to perform control of setting the amount of deviation between timing of incidence of said laser beam reflected by said first region detected by said detecting portion and timing of incidence of said laser beam reflected by said second region detected by said detecting portion in a state where said object to be detected is positioned perpendicularly to a surface of said projection region as an offset value when said timing of incidence of said laser beam reflected by said first region of said object to be detected upon said detecting portion deviates from said timing of incidence of said laser beam reflected by said second region of said object to be detected upon said detecting portion in the state where said object to be detected is positioned perpendicularly to said surface of the projection region, and acquiring a tilt angle in said vertical direction of said object to be detected with respect to said surface of said projection region on the basis of a value obtained by subtracting said offset value from a difference between said positional information in said vertical direction of said first region of said object to be detected and said positional information in said vertical direction of said second region of said object to be detected when said object to be detected is tilted in said vertical direction.

10. The projector according to claim 9, wherein
said control portion is configured to perform control of determining that said object to be detected is tilted to one side in said vertical direction if said value obtained by subtracting said offset value from said difference between said positional information in said vertical direction of said first region of said object to be detected and said positional information in said vertical direction of said second region of said object to be detected is either one of positive and negative values, and determining that said object to be detected is tilted to the other side in said vertical direction if said value obtained by subtracting said offset value from said difference between said positional information in said vertical direction of said first region of said object to be detected and said positional information in said vertical direction of said second region of said object to be detected is the other one of positive and negative values.

11. The projector according to claim 6, wherein
said control portion is configured to perform control of determining that an object that has been detected is said object to be detected if a value of a difference between said positional information in said horizontal direction or said vertical direction of said first region of said object to be detected and said positional information in said horizontal direction or said vertical direction of said second region of said object to be detected is within a preset value.

12. The projector according to claim 5, wherein
a height of said second detector from a surface of said projector region is larger than a height of said first detector from said surface of said projection region.

13. The projector according to claim 5, wherein
said object to be detected is a finger of a user, and
said control portion is configured to perform control of detecting positional information of an upper region of said finger of said user and positional information of a lower region of said finger of said user on the basis of said timing of incidence of said laser beam detected by said first detector and said timing of incidence of said laser beam detected by said second detector, and acquiring an inclination of said finger of said user with respect to said projection region from said positional information of said upper region of said finger of said user and said positional information of said lower region of said finger of said user.

14. The projector according to claim 2, wherein
said control portion is configured to perform control of comparing a moving distance of said object to be detected acquired on the basis of a change in a tilt angle of said object to be detected with respect to a surface of said projection region with a moving distance of said object to be detected acquired on the basis of a change in positional information of said object to be detected, and determining whether or not said image projected on said projection region has been manipulated by said object to be detected on the basis of a comparison result, if said detecting portion detects said change in said tilt angle of said object to be detected with respect to said surface of said projection region.

15. The projector according to claim 2, wherein
said laser beam emitting portion includes a laser beam emitting portion emitting a visible laser beam to project an arbitrary image on said projection region and a laser beam emitting portion emitting an invisible laser beam that does not contribute to an image,
said detecting portion is configured to be capable of detecting said invisible laser beam detected by said object to be detected of said laser beams emitted from said laser beam emitting portion, and
said control portion is configured to perform control of detecting said positional information of said plurality of regions of said object to be detected in said height direction on the basis of timing of incidence of said invisible laser beam detected by said detecting portion, and acquiring said inclination of said object to be detected with respect to said projection region from said positional information of said plurality of regions.
